(19) Europäisches Patentamt European Patent Office Office européen des brevets

(11) **EP 4 712 164 A1**

(12) **EUROPEAN PATENT APPLICATION**
published in accordance with Art. 153(4) EPC

(43) Date of publication:
**18.03.2026 Bulletin 2026/12**

(21) Application number: **24882851.9**

(22) Date of filing: **24.10.2024**

(51) International Patent Classification (IPC):
$H01M\ 4/38$ (2006.01)    $H01M\ 4/48$ (2010.01)
$H01M\ 4/134$ (2010.01)   $H01M\ 10/052$ (2010.01)
$C01B\ 33/02$ (2006.01)   $H01M\ 4/02$ (2006.01)

(52) Cooperative Patent Classification (CPC):
**C01B 33/02; H01M 4/02; H01M 4/134; H01M 4/38; H01M 4/48; H01M 10/052;** Y02E 60/10

(86) International application number:
**PCT/KR2024/016283**

(87) International publication number:
**WO 2025/089824 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023 KR 20230143044**

(71) Applicant: **LG Energy Solution, Ltd.**
**Seoul 07335 (KR)**

(72) Inventors:
• **KIM, Dohyeun**
**Daejeon 34122 (KR)**

• **KIM, Donghyuk**
**Daejeon 34122 (KR)**
• **HEO, Jihoi**
**Daejeon 34122 (KR)**
• **LEE, Yong Ju**
**Daejeon 34122 (KR)**
• **HYUN, Jaeik**
**Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ACTIVE MATERIAL, METHOD FOR PREPARING SAME, NEGATIVE ELECTRODE COMPOSITION, NEGATIVE ELECTRODE COMPRISING SAME FOR LITHIUM SECONDARY BATTERY, AND LITHIUM SECONDARY BATTERY COMPRISING NEGATIVE ELECTRODE**

(57)    The present application relates to a negative electrode active material, a method for preparing the negative electrode active material, a negative electrode composition, a negative electrode for a lithium secondary battery including the same, and a lithium secondary battery including the negative electrode.

[Figure 1]

EP 4 712 164 A1

## Description

[Technical Field]

This application claims priority to and the benefit of Korean Patent Application No. 10-2023-0143044 filed in the Korean Intellectual Property Office on October 24, 2023, the entire contents of which are incorporated herein by reference.

The present application relates to a negative electrode active material, a method for preparing the negative electrode active material, a negative electrode composition, a negative electrode for a lithium secondary battery including the same, and a lithium secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction. Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, as the demand for high-density energy batteries has been recently increased, studies have been actively conducted on a method of increasing the capacity using a silicon-based compound such as Si/C or SiOx together, which has a capacity 10-fold higher than that of a graphite-based material as a negative electrode active material, but a silicon-based compound, which is a high-capacity material, has a higher capacity than graphite used in the related art, but has a problem in that the volume rapidly expands in the charging process to disconnect the conductive path, resulting in deterioration in battery characteristics.

Thus, to solve problems when the silicon-based compound is used as a negative electrode active material, measures to adjust the driving potential, additionally, measures to suppress the volume expansion itself such as methods of further coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate, so that there is still a limitation in the commercialization of preparation of a battery having a negative electrode with a high content of the silicon-based compound.

Additionally, in the case of Si negative electrode active materials, studies have found out that since the grain boundary acts as a diffusion path of lithium, a wider grain boundary, that is, a smaller grain size is more advantageous for the performance characteristics of secondary batteries.

However, since this method cannot completely suppress the volume change, research capable of more effectively mitigating the volume change of silicon is required in order to improve the service life performance of batteries.

Therefore, there is a need for research on a silicon-based active material capable of preventing the conductive path from being damaged according to the volume expansion of the silicon-based compound even when the silicon-based active material is used as a negative electrode active material in order to improve the capacity performance.

<Related Art Document>

(Patent Document 1) Japanese Patent Application Laid-Open No. 2009-080971

[Detailed Description of the Invention]

[Technical Problem]

Through research, it was found that it is possible to obtain a porous silicon-based active material having internal pores by etching the surface of a crushed silicon-based active material itself through an alkaline solution treatment, and in particular, it was confirmed that as the range of the specific surface area and the tap density may be adjusted within certain ranges by changing the etching conditions, upon the lithium intercalation/deintercalation reaction, a uniform reaction occurs and the stress on the silicon-based active material is reduced.

The present application relates to a negative electrode active material, a method for preparing the negative electrode active material, a negative electrode composition, a negative electrode for a lithium secondary battery including the same, and a lithium secondary battery including the negative electrode, which can solve the above-described problems.

[Technical Solution]

An exemplary embodiment of the present specification provides a negative electrode active material including a silicon-based active material having a specific surface area of 5 m$^2$/g or more, in which the silicon-based active material has a porous structure including internal pores, the silicon-based active material has a tap density of 0.2 g/cm$^3$ or more and 0.8 g/cm$^3$ or less, and the silicon-based active material includes one or more selected from the group consisting of SiOx (x=0) and SiOx (0<x2), and includes 70 parts by weight or more of SiOx (x=0) based on 100 parts by weight of the silicon-based active material.

Another exemplary embodiment provides a method for preparing a negative electrode active material, the method including: pulverizing a silicon raw material; and forming a silicon-based active material by exposing the crushed silicon to an etching solution to etch the crushed silicon, in which the etching solution is an alkaline-based solution.

Still another exemplary embodiment is intended to provide a negative electrode composition including: the negative electrode active material according to the present application; a negative electrode conductive material; and a negative electrode binder.

Yet another exemplary embodiment is intended to provide a negative electrode for a lithium secondary battery, including: a negative electrode current collector layer; and a negative electrode active material layer provided on one surface or both surfaces of the negative electrode current collector layer, in which the negative electrode active material layer includes the negative electrode composition according to the present application or a cured product thereof.

Finally, provided is a lithium secondary battery including: a positive electrode; the negative electrode for a lithium secondary battery according to the present application; a separator provided between the positive electrode and the negative electrode; and an electrolyte.

[Advantageous Effects]

The negative electrode active material according to an exemplary embodiment of the present invention is characterized in that in addition to the existing pulverization processing method, an etching process is performed through an alkaline solution treatment to adjust the specific surface area, pore morphology, and tap density of the silicon-based active material. When a silicon-based active material is etched in an alkaline solution, anisotropic etching occurs, in which the etching speed varies depending on the direction of the crystal plane, and the silicon-based active material according to the present application can be formed by exposing polycrystalline silicon, in which the crystal planes are randomly distributed, to an alkaline solution.

The negative electrode active material of the present invention includes one or more selected from the group consisting of SiOx (x=0) and SiOx (0<x<2) as a silicon-based active material, and is mainly characterized by adjusting the surface area of the silicon-based active material to a certain range to solve the problem of volume expansion depending the charge and discharge, which is a problem caused by including 70 parts by weight or more of SiOx (x=0) based on 100 parts by weight of the silicon-based active material, that is, having a pure Si active material.

That is, by using a silicon-based active material whose surface area satisfies the range according to the present invention, particularly having an internal pore morphology, the surface area is larger than that of particles having the same particle size, which allows for a uniform lithium intercalation and deintercalation reaction, relieves stress within the particles, and reduces the pulverization of the particles. In addition, the negative electrode active material of the present invention has characteristics that the volume of the internal pores expands during charging, reducing the volume change of the entire particles and also improving the service life of the battery.

[Brief Description of Drawings]

FIG. 1 is a view illustrating a preparation process of a silicon active material according to Example 1 of the present application.
FIG. 2 is a view illustrating the stacking structure of a negative electrode for a lithium secondary battery according to an exemplary embodiment of the present application.

FIG. 3 is a view illustrating the stacking structure of a lithium secondary battery according to an exemplary embodiment of the present application.

<Explanation of Reference Numerals and Symbols>

    10: Negative electrode current collector layer
    20: Negative electrode active material layer
    30: Separator
    40: Positive electrode active material layer
    50: Positive electrode current collector layer
    100: Negative electrode for lithium secondary battery
    200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less.'

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present application, the particle size or particle diameter may mean the average diameter or representative diameter of each grain forming a metal powder.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer.'

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode active material including a silicon-based active material having a specific surface area of 5 $m^2/g$ or more, in which the silicon-based active material has a porous structure including internal pores, the silicon-based active material has a tap density of 0.2 $g/cm^3$ or more and 0.8 $g/cm^3$ or less, and the silicon-based active material includes one or more selected from the group consisting of $SiO_x$ (x=0) and $SiO_x$ (0<x2), and includes 70 parts by weight or more of $SiO_x$ (x=0) based on 100 parts by weight of the silicon-based active material.

The negative electrode active material of the present invention includes one or more selected from the group consisting of SiOx (x=0) and SiOx (0<x<2) as a silicon-based active material, and is mainly characterized by adjusting the surface area, pore morphology, and volume expansion of the silicon-based active material to certain ranges to solve the problem of volume expansion depending on the charge and discharge, which is a problem caused by including 70 parts by weight or more of SiOx (x=0) based on 100 parts by weight of the silicon-based active material, that is, having a pure Si active material.

That is, a silicon-based active material has a general grain size of several hundred to several mm due to its high crystallinity, and the silicon-based active material according to the present application has a characteristic that a porous structure including internal pores is formed in the corresponding silicon-based active material through etching treatment, and the specific surface area may be increased to improve reaction uniformity and mitigate volume change, thereby improving the service life performance of the battery.

By using a silicon-based active material whose surface area satisfies the range according to the present invention, particularly having an internal pore morphology, the surface area is larger than that of particles having the same particle size, which allows for a uniform lithium intercalation and deintercalation reaction, relieves stress within the particles, and reduces the pulverization of the particles. In addition, the negative electrode active material of the present invention has characteristics that the volume of the internal pores expands during charging, reducing the volume change of the entire particles and also improving the service life of the battery.

In an exemplary embodiment of the present application, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In an exemplary embodiment of the present application, the silicon-based active material includes SiOx (x=0), and may include 70 parts by weight or more of the SiOx (x=0) based on 100 parts by weight of the silicon-based active material.

In another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, particularly, pure silicon (Si) particles may be used as the silicon-based active material. The use of pure silicon (Si) particles as the silicon-based active material may mean that based on the total 100 parts by weight of the silicon-based active material as described above, pure Si particles (SiOx (x=0)), which are not bound to other particles or elements, are included in the above range.

In an exemplary embodiment of the present application, the silicon-based active material may be composed of silicon-based particles having 100 parts by weight of SiOx (x=0) based on 100 parts by weight of the silicon-based active material.

In an exemplary embodiment of the present application, provided is a negative electrode active material in which the silicon-based active material may include metal impurities, and in this case, the impurities are metals that may be generally included in the silicon-based active material, and specifically, the content of the metal impurities in the silicon-based active material is 0.1 parts by weight or less.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, the present invention has solved the existing problems by changing the method of preparing the silicon-based active material to adjust the specific surface area, pore morphology, and volume density of the silicon-based active material itself rather than adjusting the compositions of the conductive material and the binder in order to solve the aforementioned problems while using only the silicon-based active material as a negative electrode active material in order to improve the capacity performance.

In an exemplary embodiment of the present application, the negative electrode active material may include a silicon-based active material having a specific surface area of 5 m$^2$/g or more.

In the present application, the silicon-based active material may have a specific surface area of 15 m$^2$/g or more and 80 m$^2$/g or less.

In another exemplary embodiment, the silicon-based active material may have a specific surface area of 5 m$^2$/g or more, preferably 8 m$^2$/g or more, more preferably 12 m$^2$/g or more, specifically 13 m$^2$/g or more, and more specifically 15 m$^2$/g or more. The silicon-based active material may have a surface area of 200 m$^2$/g or less, 150 m$^2$/g or less, 100 m$^2$/g or less, and 95 m$^2$/g or less, and may satisfy a range of preferably 90 m$^2$/g or less, and more preferably 80 m$^2$/g or less. The specific surface area may be measured in accordance with DIN 66131 (using nitrogen).

In an exemplary embodiment of the present specification, the silicon-based active material includes a (220) crystal plane and a (111) crystal plane, the (220) crystal plane may have a specific surface area of 1 $m^2/g$ or more and 30 $m^2/g$ or less, and the (111) crystal plane may have a specific surface area of 0.1 $m^2/g$ or more and 5 $m^2/g$ or less.

The silicon-based active material according to the present application is subjected to an etching process after being crushed by an alkaline etching process to be described below, and when the silicon-based active material is exposed to an alkaline solution under certain conditions, anisotropic etching occurs according to the crystal plane direction, and accordingly, the (220) crystal plane is etched more.

In this case, as described above, the (220) crystal plane may have a specific surface area of 1 $m^2/g$ or more and 30 $m^2/g$ or less, preferably 5 $m^2/g$ or more and 25 $m^2/g$ or less, and 10 $m^2/g$ or more and 25 $m^2/g$ or less, and the (111) crystal plane may satisfy a specific surface area of 0.1 $m^2/g$ or more and 5 $m^2/g$ or less, preferably 0.5 $m^2/g$ or more and 4 $m^2/g$ or less, and 0.8 $m^2/g$ or more and 3 $m^2/g$ or less.

As described above, the present invention is characterized in that the specific surface area of the crystal plane satisfies the above range, and during the manufacture of an electrode using an etched silicon-based active material, the distribution of the exposed (220) plane increases, and the lithium ion mobility increases, thereby resulting in an improved service life maintenance rate of the battery.

In the present application, the specific surface area of the (220) crystal plane and the specific surface area of the (111) crystal plane may be measured as follows.

In this case, it can be assumed that as the etching is carried out under conditions in which only the surface of the silicon is etched, the sphericity and mass of the silicon particles before and after etching are not changed, and that the (111) plane is scarcely etched, so the surface area is not changed.

Before etching, the morphology of the silicon particles is simplified into a three-dimensional figure, and the area ratio of the top/bottom surfaces (111 plane) and the side surfaces (220 plane) is specified from the sphericity value, and then the specific surface area of each crystal plane is derived from the specific surface area measurement values. Thereafter, the increased specific surface area of the (220) plane may be specified from the specific surface area measurement value after etching.

Furthermore, the crystal plane ratio may be expressed by calculating the area ratio obtained by integrating the intensity of the peaks corresponding to each plane after XRD measurement.

In the present application, the specific surface areas of the (220) crystal plane and the (111) crystal plane are values measured by BET. In particular, in the present application, etching is performed using an alkaline solution, so that the (111) plane is not etched, and the specific surface area of the (220) crystal plane is calculated by subtracting the surface area of only the (111) plane obtained from a value calculated through the specific surface area before etching and the crystal plane ratio from the specific surface area obtained by BET.

The silicon-based active material has the above surface area, and the specific surface area and pore morphology of the silicon-based active material may be adjusted by changing process conditions, particularly etching conditions, in the preparation process to be described below. That is, when a negative electrode active material is prepared using the preparation method according to the present application, the negative electrode active material has a larger surface area than particles having the same particle size due to a rough surface, and in this case, as the bonding strength with the binder is increased by satisfying the above range, the negative electrode active material has a feature capable of alleviating cracks in the electrode caused by repeated charging and discharging cycles. When the surface area of the silicon-based active material is less than the above range, pores are not sufficiently formed, so that it is difficult to expect a uniform reaction during charging and discharging, and volume expansion cannot be effectively buffered. In addition, when the content exceeds the above range, there is a problem in that the service life of the battery is reduced due to excessive side reactions with an electrolytic solution.

Furthermore, during the intercalation of lithium ions, lithium ions may uniformly enter, which may reduce the stress that is applied when lithium ions are intercalated into silicon particles, thereby alleviating cracking of the particles. As a result, the negative electrode has a feature capable of improving the service life stability of the negative electrode. When the surface area size is less than the above range, the surface is smoothly formed even when the particles have the same particle size, the bonding strength with the binder deteriorates, so that electrode cracks occur, and in this case, lithium ions are non-uniformly intercalated into the particles, so that particle cracking occurs because the stress caused by the intercalation of ions is large.

In an exemplary embodiment of the present application, the negative electrode active material is characterized by having a porous structure including internal pores formed through etching instead of having external irregularities in morphology.

In the case of a morphology having internal pores as in the present application compared to a silicon-based active material having surface irregularities in morphology, the active material is characterized in that the specific surface area may be increased to a larger level, and the uniformity of the reaction may be further improved, thereby achieving stress mitigation and reduction in pulverization. In addition, as the volume expansion proceeds toward the internal pores, the internal pores serve to buffer the volume change to mitigate the volume change of the entire particles, resulting in an increase in service life maintenance rate compared to a silicon-based active material having surface irregularities in morphology.

In an exemplary embodiment of the present application, the silicon-based active material may have a tap density of 0.2 g/cm$^3$ or more and 0.8 g/cm$^3$ or less.

In another exemplary embodiment, the silicon-based active material may have a tap density of 0.2 g/cm$^3$ or more and 0.8 g/cm$^3$ or less, preferably 0.25 g/cm$^3$ or more and 0.78 g/cm$^3$ or less, more preferably 0.35 g/cm$^3$ or more and 0.77 g/cm$^3$ or less.

In the present application, the tap density means a value obtained by filling a container with a silicon powder, measuring the apparent volume of the particles obtained by vibrating the container under predetermined conditions, and dividing the mass of the silicon powder by the apparent volume.

The tap density may be adjusted within the above range depending on the degree of etching in the preparation process of the silicon-based active material to be described below. That is, in the case of the silicon-based active material according to the present application, when the pores are uniformly formed by having an internal pore morphology through etching, the tap density is reduced while satisfying the above-described range of specific surface area. However, when a silicon-based active material is formed in the form of irregularities, the specific surface area may be increased to a certain degree, but the tap density also increases, and a structure such as a pore cannot be formed in the particle, and there is a limit to the increase in the specific surface area. That is, in the case of satisfying the tap density as in the present application compared to a silicon-based active material having surface irregularities in morphology, the active material is characterized in that the specific surface area may be increased to a larger level, the uniformity of the reaction may be further improved, thereby achieving stress mitigation and reduction in pulverization.

In an exemplary embodiment of the present application, the silicon-based active material may include silicon-based particles having a particle size distribution of 0.01 $\mu$m or more and 30 $\mu$m or less.

The fact that the silicon-based active material includes silicon-based particles having a particle size distribution of 0.01 $\mu$m or more and 30 $\mu$m or less means that a large number of individual silicon-based particles having a particle size within the above range are included, and the number of silicon-based particles to be included is not limited.

When the silicon-based particles have a spherical shape, the particle size of the silicon-based particles may be expressed as the diameter of the silicon-based particle, but even in the case of other non-spherical shapes, the particle size may be measured compared to the case of the spherical shape, and in general, the particle size of individual silicon-based particles may be measured by a method measured in the art.

Meanwhile, the silicon-based active material of the present invention may have an average particle diameter (D50 particle size) of 3 $\mu$m to 10 um, specifically 5.5 $\mu$m to 8 $\mu$m, and more specifically 6 $\mu$m to 7 $\mu$m. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition including: the negative electrode active material; a negative electrode conductive material; and a negative electrode binder.

In an exemplary embodiment of the present application, provided is a negative electrode composition in which the negative electrode active material is present in an amount of 40 parts by weight or more based on 100 parts by weight of the negative electrode composition.

In another exemplary embodiment, the negative electrode active material may be included in an amount of 40 parts by weight or more, preferably 60 parts by weight or more, more preferably 65 parts by weight or more, and even more preferably 70 parts by weight or more, and may be included in an amount of 95 parts by weight or less, preferably 90 parts by weight or less, and more preferably 85 parts by weight or less, based on 100 parts by weight of the negative electrode composition.

The negative electrode composition according to the present application has a feature in which by using a negative electrode active material satisfying a specific surface area size, which can suppress the volume expansion rate in the charging and discharging process even though a silicon-based active material having a remarkably high capacity is used in the above range, the performance of the negative electrode does not deteriorate and output characteristics at charging and discharging are excellent even though the silicon-based active material is included in the above range.

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are adjusted as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present invention, as a specific silicon-based active material is used, it is possible to reduce the functional group content of the dotted conductive material, and accordingly, the present invention has an effect excellent in improving dispersibility.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may serve to improve conductivity by increasing the surface contact between silicon particles in the negative electrode and simultaneously suppress the disconnection of the conductive path due to the volume expansion. The planar conductive material may be expressed as a plate-like conductive material or a bulk conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 $\mu$m to 7 $\mu$m, specifically 3 $\mu$m to 6 $\mu$m, and more specifically 3.5 $\mu$m to 5 $\mu$m. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 $\mu$m or more and 2.0 $\mu$m or less, a D50 of 2.5 $\mu$m or more and 3.5 $\mu$m or less, and a D90 of 6.5 $\mu$m or more and 15.0 $\mu$m or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 0.25m$^2$/g or more.

In another exemplary embodiment, the planar conductive material may have a BET specific surface area of 1m$^2$/g or more and 500 m$^2$/g or less, preferably 5m$^2$/g or more and 300m$^2$/g or less, and more preferably 5m$^2$/g or more and 250m$^2$/g or less.

As the planar conductive material according to the present application, it is possible to use a high specific surface area planar conductive material; or a low specific surface area planar conductive material.

In still another exemplary embodiment, the planar conductive material is a high specific surface area planar conductive material, and the BET specific surface area may satisfy a range of 50 m$^2$/g or more and 500 m$^2$/g or less, preferably 80 m$^2$/g or more and 300 m$^2$/g or less, and more preferably 100 m$^2$/g or more and 300m$^2$/g or less.

In yet another exemplary embodiment, the planar conductive material is a low specific surface area planar conductive material, and the BET specific surface area may satisfy a range of 1 m$^2$/g or more and 40 m$^2$/g or less, preferably 5 m$^2$/g or more and 30 m$^2$/g or less, and more preferably 5 m$^2$/g or more and 25 m$^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, provided is a negative electrode composition in which the negative electrode conductive material is present in an amount of 20 parts by weight or less based on 100 parts by weight of the negative electrode composition.

In another exemplary embodiment, the negative electrode conductive material may be included in an amount of 0.1 parts by weight or more and 20 parts by weight or less, preferably 1 parts by weight or more and 20 parts by weight or less, more preferably 5 parts by weight or more and 15 parts by weight or less, and most preferably 6 parts by weight or more and 13 parts by weight or less, based on 100 parts by weight of the negative electrode composition.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 $m^2$/g or more and 4.5 $m^2$/g or less. In addition, plate-like graphite, which is a planar conductive material, is in a planar form, and may have a BET specific surface area of 5 $m^2$/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 or less, and more preferably 20 parts by weight or less, and may be included in an amount of 5 parts by weight or more and 10 parts by weight or more, based on 100 parts by weight of the negative electrode composition.

An exemplary embodiment of the present application provides a method for preparing a negative electrode active material, the method including: pulverizing a silicon raw material; and forming a silicon-based active material by exposing the crushed silicon to an etching solution to etch the crushed silicon, in which the etching solution is an alkaline-based solution.

In the related art, the negative electrode active materials was prepared by crushing silicon lumps through physical force, and when the negative electrode active material is prepared as described above, the size of the crystal grains is generally more than a range of 200 nm and the surface is smooth, so that the surface area has a value of less than 5 $m^2$/g. When the silicon-based active material is simply prepared using a method in the related art, the size of the surface area cannot be controlled, so that there is a disadvantage in that it is difficult to secure the service life stability of the negative electrode.

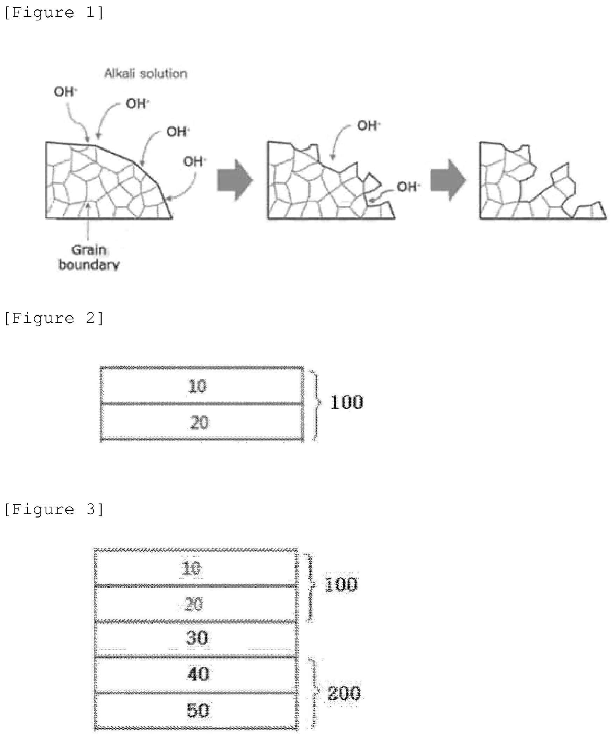

However, the method for preparing a negative electrode active material according to the present invention may form silicon particles by including an etching step as shown in FIG. 1, and accordingly, it was possible to obtain a silicon-based active material that satisfies the surface area size according to the present application. That is, as can be confirmed in FIG. 1, it can be confirmed that during exposure to an alkaline solution, the etching rate of the surface of the silicon-based active material varies depending on the direction of the crystal plane, and anisotropic etching proceeds, and as the corresponding etching proceeds, a porous structure is formed on the surface and inside.

In an exemplary embodiment of the present application, the forming of the silicon-based active material by exposing the crushed silicon to the etching solution to etch the crushed silicon may include exposing the crushed silicon to the resulting mixture, and then stirring the etching solution at a temperature of 20°C to 120°C for 30 minutes to 50 hours.

The surface area range and tap density according to the present application may be satisfied by etching silicon while stirring at the temperature for the time as described above.

In an exemplary embodiment of the present application, the alkaline-based solution may be a solution which generates OH⁻ and produces an aqueous solution with a pH exceeding 7.

In another exemplary embodiment, the alkaline-based solution may be LiOH, NaOH, or KOH.

In an exemplary embodiment of the present application, the concentration of the alkaline-based solution may be 0.001 M (mole/L) or more and 10M (mole/L) or less.

By undergoing the etching process using an alkaline solution having the concentration described above, the present invention has a feature capable of satisfying the desired specific surface area and tap density.

An exemplary embodiment of the present application may include, after the pulverizing of the silicon raw material; and the forming of the silicon-based active material by exposing the crushed silicon to the etching solution to etch the crushed silicon, adding an acid solution to the silicon-based active material to neutralize the silicon-based active material; and performing filtration under reduced pressure.

The solution including the etched silicon-based active material described above may be neutralized by adding an acid solution thereto, and then the silicon-based active material may be separated from the solution by filtration under reduced pressure or centrifugation.

In the present application, as the acid solution, it is possible to use any substance that generates $H^+$ to cause a neutralization reaction with a base without limitation, and the acid solution may be specifically HCl, $HNO_3$, or $H_2SO_4$.

Thereafter, the method may further include drying the silicon-based active material in a drying oven to remove moisture.

In this case, the drying temperature of the drying oven may be 40°C or more and 100°C or less.

In an exemplary embodiment of the present application, provided is a negative electrode for a lithium secondary battery, including: a negative electrode current collector layer; and a negative electrode active material layer including the negative electrode composition according to the present application or a cured product thereof formed on one surface or both surfaces of the negative electrode current collector layer.

FIG. 2 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 2 illustrates the negative electrode active material layer formed on one surface, but the negative electrode active material layer may be included on both surfaces of the negative electrode current collector layer.

In an exemplary embodiment of the present application, the negative electrode for a lithium secondary battery may be formed by applying a negative electrode slurry including the negative electrode composition onto one surface or both surfaces of the negative electrode current collector layer and drying the negative electrode slurry.

In this case, the negative electrode slurry may include: the above-described negative electrode composition; and a slurry solvent.

In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can dissolve a negative electrode composition, and specifically, water or NMP may be used.

In an exemplary embodiment of the present application, the negative electrode current collector layer generally has a thickness of 1 $\mu$m to 100 $\mu$m. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 $\mu$m or more and 100 $\mu$m or less, and the negative electrode active material layer has a thickness of 5 $\mu$m or more and 500 $\mu$m or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 3 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change in the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector may typically have a thickness of 3 to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

[Mode for Invention]

**<Preparation Examples>**

**<Preparation of Negative Electrode Active Material in Example 1>**

A silicon powder was added to a 0.1 M KOH aqueous solution at a mass ratio of 1:30, etching was performed by stirring the resulting mixture under a condition of 40°C for 3 hours using a hot plate and a stirring magnet, 0.1 M HCl was added to neutralize the mixture, and then the mixture was filtered under reduced pressure to obtain a silicon-based active material.

Then, the silicon-based active material was dried in a drying oven at 60°C to obtain an etched porous silicon-based active material.

**<Preparation of Negative Electrode Active Material in Comparative Example 1>**

In Example 1 above, a crushed silicon powder which had not been subjected to the etching treatment was used.

**<Preparation of Negative Electrode Active Material in Comparative Example 2>**

After a MG-Si silicon lump was gasified with silane at high temperature, a chemical reaction was performed, and then the gas was deposited on a substrate, and then, the silicon-based active material was grown through crystal nucleation to prepare the silicon-based active material.

The negative electrode active materials as described above each satisfied the physical properties shown in Table 1.

[Table 1]

| | Specific surface area $(m^2/g)$ | Tap density $(g/cm^3)$ | Structure | D50 $(\mu m)$ | Etching time (h) |
|---|---|---|---|---|---|
| Example 1 | 78 | 0.39 | Internal porous structure | 5 | 3 |
| Example 2 | 15 | 0.76 | Internal porous structure | 5 | 0.5 |
| Example 3 | 42 | 0.55 | Internal porous structure | 5 | 1 |
| Example 4 | 63 | 0.46 | Internal porous structure | 5 | 2 |
| Comparative Example 1 | 1.56 | 1.05 | - | 5 | - |
| Comparative Example 2 | 1.99 | 1.03 | External irregularity structure | 5 | - |
| Comparative Example 3 | 78 | 0.17 | Internal porous structure | 5 | 3 |
| Comparative Example 4 | 78 | 0.84 | Internal porous structure | 5 | 3 |

For reference, in Comparative Examples 3 and 4 above, the concentration of the etching solution was adjusted, and in Comparative Example 3, a 0.01 M KOH aqueous solution was used, and the etching treatment was performed at 40°C for 3 hours to prepare a silicon-based active material, and in Comparative Example 4, a 1 M KOH aqueous solution was used, and the etching treatment was performed at 40°C for 3 hours to prepare a silicon-based active material.

**<Preparation of negative electrode>**

A negative electrode slurry was prepared by adding a negative electrode active material including the silicon-based active material in Table 1, a negative electrode conductive material, and polyacrylamide as a binder at a weight ratio of 80:10:10 to distilled water as a solvent for forming a negative electrode slurry (solid concentration of 25 wt%).

Specifically, the negative electrode conductive material was carbon black (specific surface area: 45 $m^2/g$, diameter: 30 to 50 nm).

After the negative electrode conductive material, the binder and water were dispersed at 2500 rpm for 30 minutes using a homo mixer as a specific mixing method, the silicon-based active material was added thereto, and then the resulting mixture was dispersed at 2500 rpm for 30 minutes to prepare a negative electrode slurry.

Both surfaces of a copper current collector (thickness: 8 $\mu m$) as a negative electrode current collector layer were coated with the negative electrode slurry in a loading amount of 85 mg/25cm$^2$, and the copper current collector was roll-pressed and dried in a vacuum oven at 130°C for 10 hours to form a negative electrode active material layer (thickness: 33 $\mu m$), which was employed as a negative electrode (thickness of the negative electrode: 41 $\mu m$, the porosity of the negative electrode 40.0%).

**<Manufacture of secondary battery>**

A positive electrode slurry was prepared by adding LiNi$_{0.6}$Co$_{0.2}$Mn$_{0.2}$O$_2$ (average particle diameter (D50): 15 $\mu m$) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 $\mu m$) as a positive electrode current collector were coated with the positive electrode slurry in a loading amount of 537 mg/25 cm$^2$, and the aluminum current collector was roll-pressed and dried in a vacuum oven at 130°C for 10 hours to form a positive electrode active material layer (thickness: 65 $\mu m$), thereby preparing a positive electrode (thickness of the positive electrode: 77 $\mu m$, porosity of 26%).

A lithium secondary battery was prepared by interposing a polyethylene separator between the positive electrode and the negative electrode of each of the Examples and the Comparative Examples and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DMC) were mixed at a volume ratio of 10:90 and adding $LiPF_6$ as a lithium salt at a concentration of 1 M thereto.

**<Experimental Examples>**

Experimental Example 1: Results of service life performance of monocell

The secondary batteries including the negative electrodes manufactured in the Examples and the Comparative Examples were subjected to service life evaluation using an electrochemical charger/discharger and the capacity retention rate was evaluated. The secondary batteries were subjected to in-situ cycle test at 4.2-3.0 V 1 C/0.5 C, and the capacity retention rates were measured by charging/discharging the secondary batteries at 0.33 C/0.33 C (4.2-3.0 V) every 50 cycles during the test.

Service life retention rate (%) = {(Discharge capacity in the Nth cycle)/(Discharge capacity in the 1st cycle)} X 100

[Table 2]

|  | Service life maintenance ratio (%) after 200 cycles |
|---|---|
| Comparative Example 1 | 85 |
| Comparative Example 2 | 86 |
| Comparative Example 3 | 83 |
| Comparative Example 4 | 85 |
| Example 1 | 92 |
| Example 2 | 87 |
| Example 3 | 90 |
| Example 4 | 91 |

**Experimental Example 2: Change of monocell resistance**

After the capacity retention rates were measured by charging/discharging the secondary batteries at 0.33 C/0.33 C (4.2-3.0 V) every 50 cycles during the test in Experimental Example 1, the resistance increase rates were compared and analyzed by discharging the secondary batteries at 2.5 C pulse in SOC50 to measure the resistance.

For the measurement and evaluation of the resistance increase rate, data at 200 cycles was each calculated, and the results are shown in the following Table 3.

[Table 3]

|  | Resistance increase rate (%) after 200 cycles |
|---|---|
| Comparative Example 1 | 26 |
| Comparative Example 2 | 23 |
| Comparative Example 3 | 35 |
| Comparative Example 4 | 26 |
| Example 1 | 10 |
| Example 2 | 20 |
| Example 3 | 15 |
| Example 4 | 12 |

As can be confirmed in Tables 2 and 3 above, in the case of Examples 1 to 4, when the silicon-based active material is etched in an alkaline solution, anisotropic etching proceeds, in which the etching speed varies depending on the direction of the crystal plane, and the surface area of the silicon-based active material satisfies the silicon-based active material satisfying the range according to the present invention.

In particular, it could be confirmed through the experiments that the silicon-based active material has the internal pore morphology, and thus has a larger surface area than particles of the same particle size, and accordingly, a uniform lithium intercalation and deintercalation reaction can be performed to mitigate stress in the particles and reduce pulverization of the particles, and during charging, volume expands in the internal pores to mitigate the volume change of the entire particles, and thus the service life of the battery can also be improved.

In Examples 1 to 4 above, all of them have an internal porous structure, and specifically, the etching concentration and temperature conditions were maintained the same as in Example 1, but the etching time was changed to form Examples 2 to 4. As can be seen from Table 1 above, the specific surface area and the tap density may be adjusted by adjusting the etching time, and as the etching time increased, there is a tendency in which the specific surface area increased and the tap density decreased.

Comparative Example 1 is a case where the etching process was not performed in Example 1, and in this case, it could be confirmed that the specific surface area and tap density were the same as those of the crushed material of a simple silicon-based active material. Although Comparative Example 2 is a form in which the specific surface area is increased compared to Comparative Example 1, it has an external irregularity structure unlike the examples of the present application, and it could be confirmed that the tap density also increases. That is, it could be confirmed that the tap density of Comparative Example 2 was significantly increased compared to Examples 1 to 4.

Comparative Example 3 corresponds to the case where the same preparation process is performed as in Example 1, but the tap density is less than the lower limit of the tap density of the present invention, and Comparative Example 4 corresponds to the case where the same preparation process is performed as Example 1, but the tap density exceeds the upper limit of the tap density of the present invention. In both cases, the concentration of the etching solution was adjusted, and in the case of Comparative Example 3, it could be confirmed that the service life maintenance rate was reduced because the mechanical properties were weakened due to the excessive development of micropores in the particles, and in the case of Comparative Example 4, it could be confirmed that the service life maintenance rate deteriorated because the internal pores were not sufficiently formed.

When Comparative Examples 1 to 4 are taken together, the uniformity of the reaction deteriorates due to the small specific surface area when the surface area range and tap density of the present invention are not satisfied, and accordingly, the ability to mitigate stress and reduce pulverization deteriorates. Furthermore, it could be confirmed through the above experiments that compared to the Examples in which the volume expansion proceeded in the internal pores, the volume expansion could not be controlled, and the volume change of the entire particles increased, resulting in a significant decrease in the service life maintenance rate.

**Claims**

1. A negative electrode active material comprising a silicon-based active material having a specific surface area of 5 m$^2$/g or more,

   wherein the silicon-based active material has a porous structure comprising internal pores,
   the silicon-based active material has a tap density of 0.2 g/cm$^3$ or more and 0.8 g/cm$^3$ or less, and
   the silicon-based active material comprises one or more selected from the group consisting of SiOx (x=0) and SiOx (0<x<2), and comprises the SiOx (x=0) in an amount of 70 parts by weight or more based on 100 parts by weight of the silicon-based active material.

2. The negative electrode active material of claim 1, wherein the silicon-based active material has a crystal grain size of 200 nm or less.

3. The negative electrode active material of claim 1, wherein the silicon-based active material has a specific surface area of 15 m$^2$/g or more and 80 m$^2$/g or less.

4. The negative electrode active material of claim 1, wherein the silicon-based active material has a D50 particle size of 3 μm or more and 10 μm or less.

5. A method for preparing a negative electrode active material, the method comprising:

pulverizing a silicon raw material; and

forming a silicon-based active material by exposing the crushed silicon to an etching solution to etch the crushed silicon,

wherein the etching solution is an alkaline-based solution.

6. The method of claim 5, wherein the alkaline-based solution is a solution which generates OH⁻ and produces an aqueous solution with a pH exceeding 7.

7. The method of claim 5, wherein the forming of the silicon-based active material by exposing the crushed silicon to the etching solution to etch the crushed silicon comprises exposing the crushed silicon to the etching solution, and then stirring the resulting mixture at a temperature of 20°C to 120°C for 30 minutes to 50 hours.

8. The method of claim 5, wherein the concentration of the alkaline-based solution is 0.001 M (mole/L) or more and 10 M (mole/L) or less.

9. A negative electrode composition comprising:

the negative electrode active material according to any one of claims 1 to 4;
a negative electrode conductive material; and
a negative electrode binder.

10. The negative electrode composition of claim 9, wherein the negative electrode active material is present in an amount of 40 parts by weight or more based on 100 parts by weight of the negative electrode composition.

11. The negative electrode composition of claim 9, wherein the negative electrode conductive material is present in an amount of 20 parts by weight or less based on 100 parts by weight of the negative electrode composition.

12. A negative electrode for a lithium secondary battery, comprising:

a negative electrode current collector layer; and
a negative electrode active material layer provided on one surface or both surfaces of the negative electrode current collector layer,
wherein the negative electrode active material layer comprises the negative electrode composition according to claim 9 or a cured product thereof.

13. The negative electrode of claim 12, wherein the negative electrode current collector layer has a thickness of 1 $\mu$m or more and 100 $\mu$m or less, and

the negative electrode active material layer has a thickness of 5 $\mu$m or more and 500 $\mu$m or less.

14. A lithium secondary battery comprising:

a positive electrode;
the negative electrode for a lithium secondary battery according to claim 12;
a separator provided between the positive electrode and the negative electrode; and
an electrolyte.

[Figure 1]

[Figure 2]

[Figure 3]

## INTERNATIONAL SEARCH REPORT

| | International application No. |
|---|---|
| | **PCT/KR2024/016283** |

| A. | CLASSIFICATION OF SUBJECT MATTER |
|---|---|

**H01M 4/38**(2006.01)i; **H01M 4/48**(2010.01)i; **H01M 4/134**(2010.01)i; **H01M 10/052**(2010.01)i; **C01B 33/02**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/38(2006.01); C01B 33/02(2006.01); H01G 11/06(2013.01); H01M 10/052(2010.01); H01M 4/134(2010.01); H01M 4/36(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 음극 활물질(anode active material), 비표면적(specific surface area), 실리콘계 활물질(silicon-based material), 다공성 구조(porous structure), 탭 밀도 (tap density), 중량부(weight)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2017-0049969 A (IUCF-HYU (INDUSTRY-UNIVERSITY COOPERATION FOUNDATION HANYANG UNIVERSITY)) 11 May 2017 (2017-05-11)<br>See claims 1-4; and paragraphs [0005]-[0007], [0028], [0036], [0047]-[0054] and [0066]. | 1-14 |
| A | KR 10-2014-0147448 A (SEOUL NATIONAL UNIVERSITY R&DB FOUNDATION) 30 December 2014 (2014-12-30)<br>See claims 1-14; and paragraph [0037]. | 1-14 |
| A | KR 10-2015-0026925 A (LG CHEM, LTD. et al.) 11 March 2015 (2015-03-11)<br>See abstract; claims 1-7; paragraph [0047]; and table 1. | 1-14 |
| A | KR 10-2014-0013729 A (LG CHEM, LTD.) 05 February 2014 (2014-02-05)<br>See claims 1-19. | 1-14 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 February 2025** | **13 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/016283** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2022-0153593 A1 (IONOBELL INC.) 19 May 2022 (2022-05-19)<br>See abstract; and claims 1 and 2. | 1-14 |

Form PCT/ISA/210 (second sheet) (July 2022)

**INTERNATIONAL SEARCH REPORT**
Information on patent family members

International application No.

**PCT/KR2024/016283**

| Patent document cited in search report | | | Publication date (day/month/year) | Patent family member(s) | | | Publication date (day/month/year) |
|---|---|---|---|---|---|---|---|
| KR | 10-2017-0049969 | A | 11 May 2017 | KR | 10-1777373 | B1 | 11 September 2017 |
| KR | 10-2014-0147448 | A | 30 December 2014 | | None | | |
| KR | 10-2015-0026925 | A | 11 March 2015 | CN | 105189352 | A | 23 December 2015 |
| | | | | CN | 105189352 | B | 01 December 2017 |
| | | | | JP | 2016-508114 | A | 17 March 2016 |
| | | | | JP | 6037052 | B2 | 30 November 2016 |
| | | | | KR | 10-1636143 | B1 | 04 July 2016 |
| KR | 10-2014-0013729 | A | 05 February 2014 | JP | 2014-026949 | A | 06 February 2014 |
| | | | | JP | 5761760 | B2 | 12 August 2015 |
| | | | | KR | 10-1634843 | B1 | 29 June 2016 |
| | | | | US | 2014-0030599 | A1 | 30 January 2014 |
| | | | | US | 9879344 | B2 | 30 January 2018 |
| US | 2022-0153593 | A1 | 19 May 2022 | CN | 116457973 | A | 18 July 2023 |
| | | | | EP | 4222800 | A1 | 09 August 2023 |
| | | | | JP | 2023-549506 | A | 27 November 2023 |
| | | | | US | 11066305 | B1 | 20 July 2021 |
| | | | | US | 11780733 | B2 | 10 October 2023 |
| | | | | US | 2022-0306478 | A1 | 29 September 2022 |
| | | | | WO | 2022-104143 | A1 | 19 May 2022 |
| | | | | WO | 2022-104143 | A4 | 07 July 2022 |

Form PCT/ISA/210 (patent family annex) (July 2022)

**EP 4 712 164 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230143044
- JP 2009080971 A